(19) Europäisches Patentamt
European Patent Office
Office européen des brevets

(11) **EP 4 238 998 A1**

(12) **EUROPEAN PATENT APPLICATION**
published in accordance with Art. 153(4) EPC

(43) Date of publication:
**06.09.2023  Bulletin 2023/36**

(21) Application number: **21886194.6**

(22) Date of filing: **26.10.2021**

(51) International Patent Classification (IPC):
**C08F 12/36** $^{(2006.01)}$     **C08F 2/18** $^{(2006.01)}$

(52) Cooperative Patent Classification (CPC):
**C08F 2/18; C08F 12/36**

(86) International application number:
**PCT/JP2021/039457**

(87) International publication number:
**WO 2022/092076 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **30.10.2020   JP 2020182283**

(71) Applicant: **Zeon Corporation
Tokyo 100-8246 (JP)**

(72) Inventor: **YAGYU, Sakyo
Tokyo 100-8246 (JP)**

(74) Representative: **Gerauer, Marc Philippé
Kraus & Weisert
Patentanwälte PartGmbB
Thomas-Wimmer-Ring 15
80539 München (DE)**

(54) **METHOD FOR PRDUCING HOLLOW PARTICLES, AND HOLLOW PARTICLES**

(57)    A method for producing hollow particles which have a void ratio of 50% or more, the method comprising: preparing a mixture liquid containing a polymerizable monomer, a hydrophobic solvent, an aqueous medium, etc., suspending the mixture liquid to prepare a suspension in which droplets of a monomer composition containing the polymerizable monomer, the hydrophobic solvent, etc., are dispersed in the aqueous medium, and subjecting the suspension to a polymerization reaction to prepare a precursor composition containing precursor particles having a hollow portion surrounded by a shell and filled with the hydrophobic solvent, wherein the polymerizable monomer is a hydrocarbon monomer, and in 100% by mass of the polymerizable monomer, a content of a crosslinkable monomer containing two or more ethylenically unsaturated double bonds is 70% by mass or more, and wherein the hydrophobic solvent is a hydrocarbon solvent containing 5 to 8 carbon atoms.

EP 4 238 998 A1

**Description**

Technical Field

The present disclosure relates to a method for producing hollow particles, and hollow particles obtained by the production method.

Background Art

Hollow particles (hollow resin particles) are particles each of which has a hollow in its interior, and they can scatter light well and can reduce light transmissivity as compared to solid particles in which their interiors are practically filled with resin; hence, hollow particles are widely used in the applications of, for example, aqueous coating materials and paper coating compositions, as organic pigments and masking agents excellent in optical properties such as opacity and whiteness. Also, in recent years, hollow particles are used as weight reducing materials, heat insulation materials or the like for resins and coating materials, which are used in various kinds of fields such as the automotive field, the electronic field, the electric field and the architecture field.

As an electronic material application, for example, on an electronic circuit board, hollow particles may be contained in an insulation resin layer for the purpose of suppressing the occurrence of crosstalk and an increase in transmission loss. On the electronic circuit board, crosstalk and transmission loss can be suppressed by decreasing the relative permittivity and dielectric dissipation factor of the insulation resin layer. Since the interior of the hollow particles is hollow, it has been attempted to decrease the permittivity and dielectric dissipation factor of the insulation resin layer by adding the hollow particles.

For example, Patent Literature 1 discloses hollow crosslinked resin particles used in an organic insulation material having low permittivity, which are particles obtained by polymerizing 1 to 100% by weight of a crosslinkable monomer and 0 to 99% by weight of a non-crosslinkable monomer (the total of the crosslinkable monomer and the non-crosslinkable monomer is 100% by weight), which have an average particle size of 0.03 $\mu$m to 10 $\mu$m, and which have an average concentration of metal ions of 50 ppm or lower. Patent Literature 1 describes that as a polymerizable monomer component, a crosslinkable monomer, a non-crosslinkable hydrophilic monomer and another non-crosslinkable, copolymerizable polymerizable monomer are preferably used.

Patent Literature 2 discloses a method for producing hollow polymer fine particles by suspension polymerization. In the method, at least one crosslinkable monomer is used as a polymerizable component, and the following solvent is used as a slightly water-soluble solvent: a solvent which has low compatibility with a polymer or copolymer obtained from the at least one crosslinkable monomer, and which satisfies the condition $Y^X \geq Y^P$ (where $Y^X$ is the interfacial tension between water and the solvent, and $Y^P$ (mN/m) is the interfacial tension between water and a polymer adsorbing surface which is obtained by suspension polymerization of a solution obtained by dissolving a crosslinkable monomer in the solvent). Patent Literature 2 describes that divinylbenzene, divinylbiphenyl and the like are used as the crosslinkable monomer, and unsaturated hydrocarbons containing 12 to 18 carbon atoms are used as the slightly water-soluble solvent satisfying the above condition.

Citation List

Patent Literatures

Patent Literature 1: Japanese Patent Application Laid-Open (JP-A) No. 2000-313818
Patent Literature 2: JP-A No. 2004-190038

Summary of Invention

Technical Problem

However, the relative permittivity and dielectric dissipation factor of the hollow crosslinked resin particles described in Patent Literature 1 are not low enough, and the hollow crosslinked resin particles are not excellent in electrical insulation. Also, the hollow crosslinked resin particles described in Patent Literature 1 have a problem in that a polar organic solvent permeates the particles. Sometimes, as an insulation material for electronic material applications, hollow particles are incorporated in epoxy resin or the like by use of a polar organic solvent such as methyl ethyl ketone. In that case, once the polar organic solvent permeates the interior of the hollow particles, the effect of decreasing permittivity and dielectric dissipation factor, which is exerted by the hollow particles, may be reduced.

The method described in Patent Literature 2 has a problem in that the slightly water-soluble solvent included in hollow polymer fine particles is likely to remain. In the case where the amount of the slightly water-soluble solvent remaining in the hollow particles is large, the remaining solvent may cause ignition or smoke when, for example, the hollow particles are mixed and biaxially kneaded with resin. Also, the combination of the crosslinkable monomer and the slightly water-soluble solvent described in Patent Literature 2 may fail to form the hollow portion in the interior of the particles.

An object of the present disclosure is to provide a method for producing hollow particles in which the residual amount of the hydrophobic solvent used in the production process is decreased, which are excellent in electrical insulation, and which are excellent in polar organic solvent resistance. Another object of the present disclosure is to provide hollow particles obtained by the production method.

Solution to Problem

The inventor of the present disclosure found the following: in the case of producing hollow particles by suspension polymerization, using a combination of hydrocarbons as a combination of a polymerizable monomer and a hydrophobic solvent, controlling the content of a crosslinkable monomer in the polymerizable monomer to a specific amount or higher, and using a hydrocarbon solvent containing a specific number of carbon atoms, are effective in obtaining hollow particles which are excellent in electrical insulation, which are excellent in polar organic solvent resistance, and in which the residual amount of the hydrophobic solvent used in the production process is decreased.

The present disclosure provides a method for producing hollow particles which comprise a shell containing a resin and a hollow portion surrounded by the shell and which have a void ratio of 50% or more,
the method comprising:

> preparing a mixture liquid containing a polymerizable monomer, a hydrophobic solvent, a polymerization initiator, a dispersion stabilizer and an aqueous medium,
> suspending the mixture liquid to prepare a suspension in which droplets of a monomer composition containing the polymerizable monomer, the hydrophobic solvent and the polymerization initiator are dispersed in the aqueous medium, and
> subjecting the suspension to a polymerization reaction to prepare a precursor composition containing precursor particles which have a hollow portion surrounded by a shell containing a resin and which include the hydrophobic solvent in the hollow portion,
> wherein the polymerizable monomer is a hydrocarbon monomer, and in 100% by mass of the polymerizable monomer, a content of a crosslinkable monomer containing two or more ethylenically unsaturated double bonds is 70% by mass or more, and
> wherein the hydrophobic solvent is a hydrocarbon solvent containing 5 to 8 carbon atoms.

In the method for producing the hollow particles according to the present disclosure, the mixture liquid preferably contains at least one selected from the group consisting of rosin acids, higher fatty acids and metal salts thereof.

In the method for producing the hollow particles according to the present disclosure, the dispersion stabilizer is preferably an inorganic dispersion stabilizer, and the inorganic dispersion stabilizer is more preferably a sparingly water-soluble metal salt.

In the method for producing the hollow particles according to the present disclosure, a volume average particle diameter of the hollow particles is preferably 1 um or more and 10 um or less.

The present disclosure provides hollow particles which comprise a shell containing a resin and a hollow portion surrounded by the shell and which have a void ratio of 50% or more,

> wherein the shell contains a hydrocarbon polymer as the resin, and
> wherein a relative permittivity at a frequency of 1 MHz is 1.5 or less.

In the hollow particles according to the present disclosure, a dielectric dissipation factor at a frequency of 1 MHz is preferably 0.010 or less.

Also in the hollow particles according to the present disclosure, a relative permittivity at a frequency of 1 GHz is preferably 1.5 or less, and a dielectric dissipation factor at a frequency of 1 GHz is preferably 0.010 or less.

In the hollow particles according to the present disclosure, the void ratio is preferably 60% or more.

In the hollow particles according to the present disclosure, a volume average particle diameter is preferably 1 um or more and 10 um or less.

Advantageous Effects of Invention

By the above-described production method of the present disclosure, hollow particles which are excellent in electrical insulation, which are excellent in polar organic solvent resistance, and in which the residual amount of the hydrophobic solvent used in the production process is decreased, are obtained.

Brief Description of Drawings

In the accompanying drawings,

FIG. 1 is a diagram illustrating an example of the production method of the present disclosure, and
FIG. 2 is a schematic diagram showing an embodiment of a suspension in a suspension step.

Description of Embodiments

In the present disclosure, "A to B" in a numerical range is used to describe a range in which the numerical value A is included as the lower limit value and the numerical value B is included as the upper limit value.
Also in the present disclosure, (meth)acrylate means each of acrylate and methacrylate; and (meth)acryl means each of acryl and methacryl.
The hollow particles obtained by the production method of the present disclosure are particles which comprise a resin-containing shell (outer shell) and a hollow portion surrounded by the shell.
In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. According to the production method of the present disclosure, the shell of the hollow particles can be solid.
The hollow portion of the hollow particles can be determined by, for example, SEM observation of a cross section of the particles or TEM observation of the particles as they are.
From the viewpoint of exerting excellent electrical insulation, the hollow portion of the hollow particles obtained by the production method of the present disclosure, is preferably filled with gas such as air, or it is preferably in a reduced pressure state close to vacuum.
Hereinafter, the method for producing the hollow particles according to the present disclosure and the hollow particles of the present disclosure obtained by the production method of the present disclosure, will be described in detail.

1. Method for producing hollow particles

The method for producing the hollow particles according to the present invention, is a method for producing hollow particles which comprise a shell containing a resin and a hollow portion surrounded by the shell and which have a void ratio of 50% or more,
the method comprising:

preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
subjecting the suspension to a polymerization reaction to prepare a precursor composition containing precursor particles which have a hollow portion surrounded by a shell containing a resin and which include the hydrophobic solvent in the hollow portion,
wherein the polymerizable monomer is a hydrocarbon monomer, and in 100% by mass of the polymerizable monomer, a content of a crosslinkable monomer containing two or more ethylenically unsaturated double bonds is 70% by mass or more, and
wherein the hydrophobic solvent is a hydrocarbon solvent containing 5 to 8 carbon atoms.

The method for producing the hollow particles according to the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

In the production method of the present disclosure, the hydrocarbon monomer is used as the polymerizable monomer, and the hydrocarbon solvent containing 5 to 8 carbon atoms is used as the hydrophobic solvent. Accordingly, the hollow portion that is clearly distinguished from the shell can be formed in the interior of the particles; the amount of the residual hydrophobic solvent in the particles can be decreased; the relative permittivity and dielectric dissipation factor of the hollow particles can be remarkable decreased; and the polar organic solvent resistance of the hollow particles can be increased. In the present disclosure, the polar organic solvent resistance may be simply referred to as "solvent resistance".

The hollow crosslinked resin particles descried in Patent Literature 1 are poor in electrical insulation and solvent resistance. Since the hollow crosslinked resin particles described in Patent Literature 1 contain a heteroatom derived from methyl methacrylate or the like in the shell, the relative permittivity and dielectric dissipation factor of the particles cannot be sufficiently decreased. In addition, since the hollow crosslinked resin particles have good compatibility between polar organic solvents and the shell, it is thought that polar organic solvents easily permeate the shell.

In the hollow polymer fine particles obtained by the production method described in Patent Literature 2, the residual amount of the slightly water-soluble solvent used in the production process is large. In the method described in Patent Literature 2, to satisfy the above-described condition $Y^X \geq Y^P$, saturated hydrocarbons containing 12 to 18 carbon atoms are used as the slightly water-soluble solvent. Since saturated hydrocarbons containing 12 to 18 carbon atoms have a high boiling point, they are likely to remain in the particles. Also in the method described in Patent Literature 2, the hollow portion is less likely to be formed in the particles. In the case of the combination of the crosslinkable monomer and the slightly water-soluble solvent described in Patent Literature 2, due to good compatibility between them, it is thought that sufficient phase separation does not occur between the crosslinkable monomer and the slightly water-soluble solvent in the droplets dispersed in the suspension, and the hollow portion is less likely to be formed in the interior of the particles.

In the production method of the present disclosure, due to the use of the hydrocarbon solvent containing 5 to 8 carbon atoms as the hydrophobic solvent, the hydrophobic solvent is difficult to volatilize at the polymerization temperature. Accordingly, the polymerization reaction can be sufficiently developed. In addition, since the hydrophobic solvent can be easily removed from the hollow portion by the solvent removal step, the amount of the residual hydrophobic solvent can be decreased.

In the hollow particles obtained by the production method of the present disclosure, the polymer which constitutes the shell is the hydrocarbon polymer, and it does not contain a heteroatom. Accordingly, the hollow particles are low in relative permittivity and dielectric dissipation factor and excellent in electrical insulation. In the present disclosure, the electrical insulation increases as the relative permittivity and the dielectric dissipation factor decrease.

Also in the production method of the present disclosure, 70% by mass or more of the crosslinkable hydrocarbon monomer containing two or more ethylenically unsaturated double bonds, is contained in 100% by mass of the polymerizable monomer. Accordingly, the hollow portion is easily formed in the particles. A polymer with high crosslinking density is produced by polymerizing the polymerizable monomer which contains the crosslinkable hydrocarbon monomer in the above ratio. It is estimated that compared to a polymer with low crosslinking density, phase separation is likely to occur between the polymer with high crosslinking density and the hydrophobic solvent. In the production method of the present disclosure, it is estimated that when the suspension is subjected to a polymerization reaction, the shell-constituting component produced in the droplets obtains appropriate compatibility with the hydrophobic solvent which is the hydrocarbon solvent containing 5 to 8 carbon atoms and, accordingly, phase separation occurs between the shell-constituting component and the hydrophobic solvent; the hollow portion is formed in the interior of the particles; and the shell which is clearly distinguished from the hollow portion is formed. In the droplets, when the compatibility between the shell-constituting component and the hydrophobic solvent is too high, porous particles are produced. On the other hand, when the compatibility between them is too low, fine resin particles are produced in the interior of the hollow particles. As the gas-filled space in the interior of the hollow particles increases, the relative permittivity and the dielectric dissipation factor tend to decrease. When the interior of the particles is porous or when fine resin particles are present in the interior of the particles, the gas-filled space is present in a dispersed state even if the particles have the same void ratio, and the size of each space decreases. Accordingly, the relative permittivity and dielectric dissipation factor of the porous particles or those of the hollow particles in which many fine resin particles are present, tend to increase. Meanwhile, in the production method of the present disclosure, the hollow portion which is clearly distinguished from the shell is formed in the interior of the particles in a void ratio of 50% or more, and the production of fine resin particles in the interior of the particles is suppressed. Accordingly, such hollow particles are obtained, that an increase in the relative permittivity and dielectric dissipation factor is suppressed and the electrical insulation further increase.

When the interior of the particles is porous, from the structural point of view, the solvent easily permeates the shell. Accordingly, the solvent resistance tends to deteriorate. Meanwhile, in the production method of the present disclosure, the hollow portion which is clearly distinguished from the shell is formed, and the shell is likely to be solid. When the shell is solid, from the structural point of view, the solvent is difficult to permeate the shell. Also in the production method of the present disclosure, since the polymerizable monomer contains 70% by mass or more of the crosslinkable monomer, a covalent bond network is tightly strung in the shell, and the crosslinking density of the shell is high. Accordingly, the solvent is difficult to permeate the shell. In addition, in the hollow particles obtained by the production method of the present disclosure, since the shell-constituting polymer is the hydrocarbon polymer, the compatibility between the shell and the polar organic solvent is low, and from the viewpoint of compatibility, the polar solvent is difficult to permeate the shell. Accordingly, the hollow particles obtained by the production method of the present disclosure are excellent in polar organic solvent resistance.

According to the present disclosure, the method for producing the hollow particles includes the steps of preparing the mixture liquid, preparing the suspension, and subjecting the suspension to the polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles according to the present disclosure, may be a production method including the following steps.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium.

(2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

(3) Polymerization step

The polymerization step includes subjecting the suspension to a polymerization reaction to prepare the precursor composition containing the precursor particles which have the hollow portion surrounded by the shell containing the resin and which include the hydrophobic solvent in the hollow portion.

(4) Solid-liquid separation step

The solid-liquid separation step includes performing solid-liquid separation of the precursor composition to obtain the precursor particles including the hydrophobic solvent in the hollow portion.

(5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

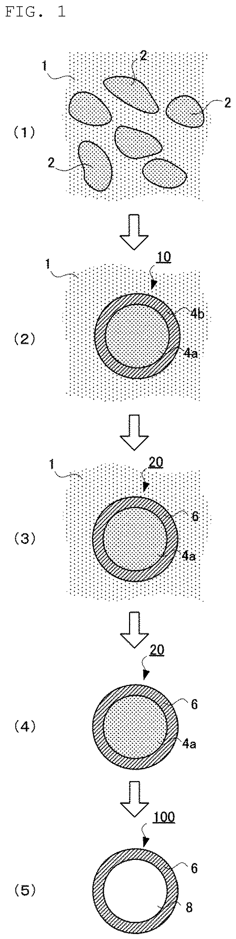

FIG. 1 is a schematic diagram showing an example of the production method of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and a droplet 10 of the monomer composition dispersed in the aqueous medium 1. The droplet 10 of the monomer composition contains the polymerizable monomer, the hydrophobic solvent and the polymerization initiator, and their distribution in the droplet is not uniform. The droplet 10 of the monomer composition has the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition containing the precursor particles which have the hollow portion surrounded by the shell containing the resin and which include the hydrophobic solvent in the hollow portion. The precursor composition contains the aqueous medium 1 and the precursor particle (a precursor particle 20) which includes the hydrophobic solvent 4a in the hollow portion. A shell 6 forming the outer surface of the precursor particle 20 is formed by polymerization of the polymerizable monomer in the droplet 10 of the monomer composition, and the shell 6 contains the polymer of the polymerizable monomer as the resin.

The diagram (4) of FIG. 1 is a schematic cross-sectional view showing an embodiment of the precursor particle after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particle after the solvent removal step. The diagram (5) of FIG. 1 shows a state where the hydrophobic solvent 4a has been removed from the state shown in the diagram (4) of FIG. 1. By the removal of the hydrophobic solvent from the precursor particle, a hollow particle 100 having a gas-filled hollow portion 8 in the interior of the shell 6, is obtained.

Hereinbelow, the five steps described above and other steps are described in order.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the order of (A) the polymerizable monomer, (B) the hydrophobic solvent, (C) the polymerization initiator, (D) the dispersion stabilizer, (E) the aqueous medium and (F) other materials.

(A) Polymerizable monomer

In the production method of the present disclosure, as the polymerizable monomer, a hydrocarbon monomer which is composed of carbon and hydrogen and which contains one or more addition-polymerizable ethylenically unsaturated double bonds, is used.

As the polymerizable monomer, examples include a non-crosslinkable monomer containing only one ethylenically unsaturated double bond and a crosslinkable monomer containing two or more ethylenically unsaturated double bonds. The crosslinkable monomer can form crosslinking in the resin by the polymerization reaction.

The polymerizable monomer used in the production method of the present disclosure contains at least the crosslinkable monomer. It may further contain the non-crosslinkable monomer to the extent that does not impair the effects of the present disclosure.

[Crosslinkable monomer]

Since the crosslinkable monomer has a plurality of ethylenically unsaturated double bonds, monomers can be linked together, and the crosslinking density of the shell can be increased.

The crosslinkable monomer used in the production method of the present disclosure is the hydrocarbon monomer containing two or more ethylenically unsaturated double bonds, such as divinylbenzene, divinylbiphenyl and divinylnaphthalene. These crosslinkable monomers may be used alone or in combination of two or more.

From the point of view that the polymerization reaction is easily stabilized and hollow particles with high strength and high heat resistance are obtained, divinylbenzene is preferably used as the crosslinkable monomer.

The molecular weight of the crosslinkable monomer is preferably 210 or less, more preferably 200 or less, and still more preferably 150 or less. When the molecular weight of the crosslinkable monomer is equal to or less than the upper limit value, a polymer with high crosslinking density is produced, and phase separation between the hydrophobic solvent and the shell-constituting component is promoted in the droplets of the monomer composition. Accordingly, the hollow portion is likely to be produced in the interior of the particles. The lower limit of the molecular weight of the crosslinkable monomer is not particularly limited. From the viewpoint of suppressing the volatilization of the crosslinkable monomer during polymerization, the molecular weight of the crosslinkable monomer is preferably 100 or more, and more preferably 120 or more.

In the production method of the present disclosure, the content of the crosslinkable monomer is 70% by mass or more in 100% by mass of the polymerizable monomer. Since the content of the crosslinkable monomer is 70% by mass or more, sufficient phase separation occurs between the shell-constituting component and the hydrophobic solvent in the droplets of the monomer composition, and the hollow portion is formed, accordingly. When the content of the crosslinkable monomer is 70% by mass or more, the content of the crosslinkable monomer unit in the shell of the hollow particles is large enough, and a covalent bond network is tightly strung in the shell. As a result, the crosslinking density of the shell is increased, and the solvent resistance thereof is increased, accordingly. In addition, the shell thus formed is excellent in strength, is less likely to collapse, and is less likely to deform even when heat or the like is applied from the outside. The content of the crosslinkable monomer is preferably 80% by mass or more, more preferably 90% by mass or more, and still more preferably 95% by mass or more.

In the case of using a commercially-available product as the crosslinkable monomer, if the crosslinkable monomer of the commercially-available product had a purity of less than 100% and a substance other than the crosslinkable monomer is contained as an impurity, the above-described content of the crosslinkable monomer is not defined as the content of the commercially-available product. It is defined as the content of only the crosslinkable monomer, and the content of the impurity is excluded therefrom.

The commercially-available crosslinkable monomer product may contain an impurity such as a non-crosslinkable monomer in which a part of the ethylenically unsaturated double bonds of the crosslinkable monomer are changed into single bonds and only one ethylenically unsaturated double bond is left, and a non-crosslinkable monomer used as a raw material for the crosslinkable monomer. More specifically, a commercially-available divinylbenzene product may contain ethylvinylbenzene, which is a non-crosslinkable monomer, as an impurity.

[Non-crosslinkable monomer]

In the production method of the present disclosure, the non-crosslinkable monomer which may be contained in the polymerizable monomer is a hydrocarbon monomer containing only one ethylenically unsaturated double bond. As the hydrocarbon monomer, examples include, but are not limited to, an aromatic vinyl monomer such as styrene, vinyltoluene, α-methylstyrene, p-methylstyrene, ethylvinylbenzene, ethylvinylbiphenyl and ethylvinylnaphthalene; a monoolefin monomer such as ethylene, propylene and butylene; and a diene monomer such as butadiene and isoprene. These non-crosslinkable monomers may be used alone or in combination of two or more.

The non-crosslinkable monomer contained in the polymerizable monomer may be an impurity contained in the commercially-available crosslinkable monomer product.

In the production method of the present disclosure, the content of the non-crosslinkable monomer is 30% by mass or less, preferably 20% by mass or less, more preferably 10% by mass or less, and still more preferably 5% by mass or less in 100% by mass of the polymerizable monomer.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the content of the polymerizable monomer is preferably from 15% by mass to 50% by mass, more preferably from 20% by mass to 40% by mass, and still more preferably from 20% by mass to 30% by mass.

From the viewpoint of increasing the mechanical strength of the hollow particles, the content of the polymerizable monomer is preferably 90% by mass or more, more preferably 95% by mass or more, and still more preferably 99% by mass or more, with respect to the total mass (100% by mass) of a solid component obtained by excluding the hydrophobic solvent from the material for the oil phase in the mixture liquid.

In the present disclosure, the solid component includes all components excluding a solvent, and a liquid polymerizable monomer and the like are included in the solid component.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the hollow particles including the hydrophobic solvent, is obtained. That is, since the hydrophobic solvent collects in the interior of the particles, the hollow portion filled with the hydrophobic solvent is formed in the interior of the obtained precursor particles.

In the production method of the present disclosure, as the hydrophobic solvent, a hydrocarbon solvent which is composed of carbon and hydrogen and which contains 5 to 8 carbon atoms, is used. As the hydrocarbon solvent containing 5 to 8 carbon atoms, at least one selected from the group consisting of a chain aliphatic hydrocarbon solvent containing 5 to 8 carbon atoms, a cyclic aliphatic hydrocarbon solvent containing 5 to 8 carbon atoms, and an aromatic hydrocarbon solvent containing 5 to 8 carbon atoms is preferably used.

As the chain aliphatic hydrocarbon solvent containing 5 to 8 carbon atoms, examples include, but are not limited to, pentane, hexane, heptane, octane, 2-methylbutane and 2-methylpentane.

As the cyclic aliphatic hydrocarbon solvent containing 5 to 8 carbon atoms, examples include, but are not limited to, cyclohexane and cycloheptane.

As the aromatic hydrocarbon solvent containing 5 to 8 carbon atoms, examples include, but are not limited to, benzene, toluene and xylene.

These hydrophobic solvents may be used alone or in combination of two or more.

The hydrophobic solvent used in the production method of the present disclosure is preferably at least one selected from the group consisting of a chain aliphatic hydrocarbon solvent containing 5 to 8 carbon atoms and a cyclic aliphatic hydrocarbon solvent containing 5 to 8 carbon atoms, more preferably a chain aliphatic hydrocarbon solvent containing 5 to 8 carbon atoms, still more preferably a chain saturated hydrocarbon solvent containing 5 to 8 carbon atoms such as pentane, hexane, heptane and octane, and even more preferably at least one selected from the group consisting of pentane, hexane, heptane and octane. This is because the hollow portion is easily formed; the hollow particles excellent in electrical insulation and solvent resistance are easily obtained; and the amount of the residual hydrophobic solvent is easily decreased.

In the present disclosure, when the hydrophobic solvent is a hydrocarbon solvent containing 5 to 8 carbon atoms, it means that a hydrophobic solvent other than the hydrocarbon solvent containing 5 to 8 carbon atoms is not detected by gas chromatography (GC).

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.0 or less. The relative permittivity is one of the indices of the level of the polarity of a compound. In the case where the relative permittivity of the hydrophobic solvent is 2.0 or less and sufficiently small, it is considered that phase separation progresses rapidly in the droplets of the polymerizable monomer and a hollow is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9) and octane (1.9)

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the crosslinkable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. With respect to 100 parts by mass of the polymerizable monomer, the content of the hydrophobic solvent in the mixture liquid is more preferably 60 parts by mass or more and 400 parts by mass or less, and still more preferably 70 parts by mass or more and 300 parts by mass or less.

(C) Polymerization initiator

In the production method of the present disclosure, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water of 0.2% by mass or less. As the oil-soluble polymerization initiator, examples include, but are not limited to, benzoyl peroxide, lauroyl peroxide, t-butyl peroxide 2-ethylhexanoate, 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the oil-soluble polymerization initiator is preferably from 0.1 parts by mass to 10 parts by mass, more preferably from 0.5 parts by mass to 7 parts by mass, and still more preferably from 1 part by mass to 5 parts by mass. When the content of the oil-soluble polymerization initiator is within the above range, a polymerization reaction can progress sufficiently; the oil-soluble polymerization initiator is less likely to remain after the end of the polymerization reaction; and an unexpected side reaction is less likely to progress.

(D) Dispersion stabilizer

The dispersion stabilizer is an agent for dispersing the droplets of the monomer composition in the aqueous medium in the suspension step. In the present disclosure, an inorganic dispersion stabilizer is preferably used as the dispersion stabilizer, from the point of view that the particle diameter of the droplets can be easily controlled in the suspension and the particle size distribution of the obtained hollow particles can be sharp, and that an excessive decrease in the shell thickness is suppressed, and a decrease in the strength of the hollow particles is suppressed. The inorganic dispersion stabilizer can exert such effects especially when the inorganic dispersion stabilizer is used in combination with the particle diameter control agent described later.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; and a metal hydroxide such as aluminum hydroxide, magnesium hydroxide, calcium hydroxide, barium hydroxide and iron(II)hydroxide. These inorganic dispersion stabilizers may be used alone or in combination of two or more.

Of these inorganic dispersion stabilizers, a sparingly water-soluble metal salt such as the above-mentioned sulfate, carbonate, phosphate and metal hydroxide is preferred; a metal hydroxide is more preferred; and a magnesium hydroxide is particularly preferred.

In the present disclosure, the sparingly water-soluble metal salt is preferably an inorganic metal salt such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. By using the sparingly water-soluble inorganic dispersion stabilizer in the form of the colloidal dispersion containing the sparingly water-soluble inorganic dispersion stabilizer colloidal particles, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt may be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble polyvalent metal salts may be used alone or in combination of two or more.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts. In this method, from the point of view that the particle diameter of the sparingly water-soluble metal hydroxide colloidal particles can be suitably controlled, it is preferable to mix the aqueous solutions by, while stirring the aqueous solution of the water-soluble polyvalent metal salt, gradually adding the aqueous solution of the at least one selected from alkali metal hydroxide salts and alkaline earth metal hydroxide salts to the aqueous solution of the water-soluble polyvalent metal salt.

From the viewpoint of obtaining the hollow particles having a volume average particle diameter of 1 um or more and 10 um or less, it is preferable to use a colloidal dispersion obtained by reacting the water-soluble polyvalent metal salt with the at least one selected from alkali metal hydroxide salts and alkaline earth metal hydroxide salts at a temperature of 20°C or more and 50°C or less in the aqueous medium.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 10 parts by mass, and more preferably from 1.0 part by mass to 8.0 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is generally 2 parts by mass or more and 15 parts by mass or less, and preferably 3 parts by mass or more and 8 parts by mass or less.

(E) Aqueous medium

In the present disclosure, the term "aqueous medium" means a medium selected from the group consisting of water, a hydrophilic solvent and a mixture thereof.

The hydrophilic solvent in the present disclosure is not particularly limited, as long as it is one that mixes with water sufficiently and does not develop phase separation. Examples of the hydrophilic solvent include alcohols such as methanol and ethanol; tetrahydrofuran (THF); and dimethyl sulfoxide (DMSO).

Among the aqueous media, water is preferably used in terms of its high polarity. When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

(F) Other materials

The mixture liquid may further contain other materials that are different from the above-mentioned materials (A) to (E), to the extent that does not impair the effects of the present disclosure.

As another material, the mixture liquid preferably contains a particle diameter control agent. When the mixture liquid contains the particle diameter control agent, the particle diameter of the droplets of the monomer composition and the thickness of the shell of the obtained hollow particles can be appropriately controlled.

As the particle diameter control agent, at least one selected from the group consisting of rosin acids, higher fatty acids and metal salts thereof is preferably used. In the suspension step described later, the particle diameter control agent can appropriately control the particle diameter of the droplets of the monomer composition containing the polymerizable monomer and the hydrophobic solvent. In the suspension step, the droplets of the monomer composition are formed in the aqueous medium by the action of the dispersion stabilizer. In the droplets of the monomer composition, phase separation occurs between the hydrophobic solvent and the material containing the polymerizable monomer and not containing the hydrophobic solvent; the hydrophobic solvent is distributed in the center; and the material not containing the hydrophobic solvent is distributed on the surface side. When the mixture liquid contains the particle diameter control agent, the droplets are presumed to have the following structure: the particle diameter control agent is distributed in the vicinity of the surface of the droplets of the monomer composition, and the dispersion stabilizer is on the surface of the droplets. Such a material distribution structure is formed according to differences in affinity for the aqueous medium between the materials. When the mixture liquid contains the particle diameter control agent, the particle diameter of the droplets of the monomer composition can be appropriately controlled. This is thought to be because the droplets of the monomer composition in the suspension have the above-mentioned material distribution structure, an interaction between the dispersion stabilizer and the particle diameter control agent occurs on the surface of the droplets, and the dispersibility of the droplets by the dispersion stabilizer is changed.

The particle diameter control agent is more preferably at least one selected from rosin acids and alkali metal salts thereof.

The rosin acids can be obtained from rosin such as gum rosin, tall rosin and wood rosin.

The components contained in the rosin acids obtained from the rosin are, for example, abietic acid, dehydroabietic acid, palustric acid, isopimaric acid and pimaric acid. The component ratio of the rosin acids is diverse, and it varies depending on the type of the rosin, the type and growing area of pine which is a raw material of rosin, etc.

The rosin acids and metal salts thereof used in the present disclosure are more preferably rosin acids containing 50% by mass or more of an abietic acid compound such as abietic acid, dehydroabietic acid, palustric acid and hydrides thereof, and alkali metal salts of the rosin acids.

The higher fatty acids are preferably higher fatty acids containing 10 to 25 carbon atoms in which the carbon atom of the carboxyl group is excluded. As such higher fatty acids, for example, lauric acid ($CH_3(CH_2)_{10}COOH$), tridecanoic acid ($CH_3(CH_2)_{11}COOH$), myristic acid ($CH_3(CH_2)_{12}COOH$), pentadecanoic acid ($CH_3(CH_2)_{13}COOH$), palmitic acid ($CH_3(CH_2)_{14}COOH$), heptadecanoic acid ($CH_3(CH_2)_{15}COOH$), stearic acid ($CH_3(CH_2)_{16}COOH$), arachidic acid ($CH_3(CH_2)_{18}COOH$), behenic acid ($CH_3(CH_2)_{20}COOH$) and lignoceric acid ($CH_3(CH_2)_{22}COOH$) are preferred.

As the metal used in the metal salts of the rosin acid or higher fatty acids, examples include, but are not limited to, an alkali metal such as Li, Na and K, and an alkaline-earth metal such as Mg and Ca. Of them, an alkali metal is preferred, and at least one selected from Li, Na and K is more preferred.

When at least one selected from the group consisting of rosin acids, higher fatty acids and metal salts thereof is used as the particle diameter control agent, the total content of the rosin acids, higher fatty acids and metal salts thereof is preferably 0.0001 parts by mass or more and 0.1 parts by mass or less, more preferably 0.001 parts by mass or more and 0.01 parts by mass or less, and still more preferably 0.0015 parts by mass or more and 0.006 parts by mass or less, with respect to the total (100 parts by mass) of the polymerizable monomer and the hydrophobic solvent. When the total content is equal to or more than the lower limit value, the particle diameter of the hollow particles and the thickness of the shell can be easily controlled, and the strength of the hollow particles can be increased. On the other hand, when the total content is equal to or less than the upper limit value, a decrease in the content of the polymerizable monomer can be suppressed. Accordingly, a decrease in the strength of the shell can be suppressed, and a collapse of the hollow particles can be further suppressed.

The mixture liquid is obtained by mixing the above-mentioned materials and other materials as needed, appropriately stirring the mixture, etc. In the mixture liquid, an oil phase containing the lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase containing the polymerizable monomer, the hydrophobic solvent and the polymerization initiator with the aqueous phase containing the dispersion stabilizer and the aqueous medium in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited. For example, it is performed using an apparatus capable of performing strong stirring, such as an (in-line type) emulsifying disperser (e.g., a horizontal in-line type disperser such as MILDER (product name, manufactured by Pacific Machinery & Engineering Co., Ltd.) and CAVITRON (product name, manufactured by EUROTEC, Ltd.) and a vertical in-line type disperser such as DRS 2000/5 (product name, manufactured by IKA Works, Inc.)) and a high-speed emulsifying disperser such as T.K. HOMOMIXER MARK II (product name, manufactured by PRIMIX Corporation).

In the suspension prepared in the suspension step, the droplets of the monomer composition containing the lipophilic materials mentioned above and having a particle diameter of from 1 um to 10 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

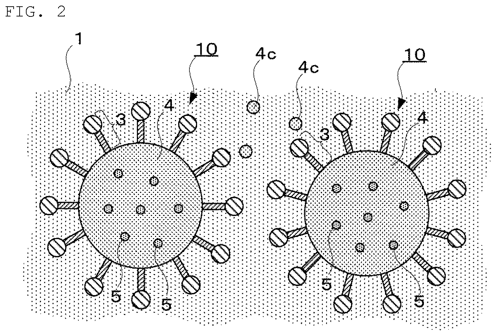

FIG. 2 is a schematic diagram showing an embodiment of the suspension in the suspension step. Each droplet 10 of the monomer composition in FIG. 2 schematically shows a cross section thereof. FIG. 2 is merely a schematic diagram, and the suspension in the present disclosure is not limited to that shown in FIG. 2. A part of FIG. 2 corresponds to the diagram (2) of FIG. 1 described above.

FIG. 2 shows a state where the droplets 10 of the monomer composition and the polymerizable monomer 4c dispersed in the aqueous medium 1, are dispersed in the aqueous medium 1. Each droplet 10 is formed by the oil-soluble monomer composition 4 and a dispersion stabilizer 3 surrounding the periphery of the oil-soluble monomer composition 4.

The monomer composition contains the oil-soluble polymerization initiator 5, the polymerizable monomer and the hydrophobic solvent (none of them is illustrated).

Each droplet 10 is a minute oil droplet which contains the monomer composition 4, and the oil-soluble polymerization initiator 5 generates polymerization initiating radicals in the interior of the minute oil droplet. Therefore, the precursor particles with a target particle diameter can be produced without excessively growing the minute oil droplet.

In such a suspension polymerization method using the oil-soluble polymerization initiator, there is no opportunity for the polymerization initiator to come into contact with the polymerizable monomer 4c dispersed in the aqueous medium 1. Thus, the subgeneration of surplus resin particles (e.g., solid particles having a relatively small particle diameter) in addition to the target resin particles having the hollow portion, can be suppressed by using the oil-soluble polymerization initiator.

(3) Polymerization step

The polymerization step includes subjecting the suspension obtained by the suspension step to a polymerization reaction to prepare a precursor composition containing precursor particles which have a hollow portion surrounded by a shell containing a resin and which include the hydrophobic solvent in the hollow portion. The precursor particles are formed by polymerization of the polymerizable monomer contained in the droplets of the monomer composition. The shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 80°C, and more preferably from 50°C to 70°C.

The temperature increase rate up to the polymerization temperature, is preferably from 10°C/h to 60°C/h, and more preferably from 15°C/h to 55°C/h.

The polymerization reaction time is preferably from 1 hour to 48 hours, and more preferably from 4 hours to 36 hours.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

(4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

By removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, in the slurry containing the precursor particles and the aqueous medium, the hydrophobic solvent included in the precursor particles is substituted with the aqueous medium of the slurry, thereby removing the hydrophobic solvent.

In this method, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several kinds of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, an aqueous slurry is obtained, in which the aqueous medium is included in the precursor particles. The slurry is subjected to solid-liquid separation to obtain hollow particles, and the aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by substituting, in the slurry containing the precursor particles and the aqueous medium, the hydrophobic solvent included in the precursor particles with the aqueous medium of the slurry, subjecting the slurry to solid-liquid separation, and then removing the aqueous medium from the precursor particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, a hydrophobic organic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic organic solvent included in the precursor particles from the precursor composition at a predetermined pressure (a high, normal or reduced pressure), or evaporating the hydrophobic organic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following hollow portion re-substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably controlled to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Hollow portion re-substitution step

The hollow portion re-substitution step includes resubstituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application thereof.

2. Hollow particles

The hollow particles of the present disclosure are hollow particles which comprise a shell containing a resin and a hollow portion surrounded by the shell and which have a void ratio of 50% or more,

wherein the shell contains a hydrocarbon polymer as the resin, and
wherein a relative permittivity at a frequency of 1 MHz is 1.5 or less.

The hollow particles of the present disclosure are obtained by the above-mentioned production method of the present disclosure.

The hollow particles of the present disclosure are low in relative permittivity and dielectric dissipation factor and excellent in electrical insulation.

By the production method of the present disclosure, the relative permittivity of the hollow particles at a frequency of 1 MHz can be 1.4 or less in a more preferred embodiment. The lower limit of the relative permittivity of the hollow particles of the present disclosure at a frequency of 1 MHz is not particularly limited, and it is generally 1.0 or more.

By the production method of the present disclosure, the dielectric dissipation factor of the hollow particles at a frequency of 1 MHz can be 0.010 or less. In a more preferred embodiment, it can be 0.007 or less. The lower limit of the dielectric dissipation factor of the hollow particles of the present disclosure at a frequency of 1 MHz is not particularly limited, and it is generally 0.0001 or more, and it may be 0.001 or more.

By the production method of the present disclosure, the relative permittivity of the hollow particles at a frequency of 1 GHz can be 1.5 or less. In a more preferred embodiment, it can be 1.4 or less. The lower limit of the relative permittivity of the hollow particles of the present disclosure at a frequency of 1 GHz is not particularly limited, and it is generally 1.0 or more.

By the production method of the present disclosure, the dielectric dissipation factor of the hollow particles at a frequency of 1 GHz can be 0.010 or less. In a more preferred embodiment, it can be 0.005 or less. The lower limit of the dielectric dissipation factor of the hollow particles of the present disclosure at a frequency of 1 GHz is not particularly limited, and it is generally 0.001 or more.

In the present disclosure, the relative permittivity and dielectric dissipation factor of the hollow particles are measured by use of a perturbation-type measuring device, at a measurement frequency of 1 MHz or 1 GHz.

The hydrocarbon polymer which is contained in the shell of the hollow particles of the present invention as the resin, is a polymer of the polymerizable monomer used in the production method of the present disclosure.

In the total solid content (100% by mass) of the shell, the content of the hydrocarbon polymer is preferably 99% by mass or more, more preferably 99.5% by mass or more, and still more preferably 99.9% by mass or more. By controlling the content of the hydrocarbon polymer to the lower limit value or more, the electrical insulation and solvent resistance of the hollow particles can be increased.

To suppress a decrease in the electrical insulation or solvent resistance, the shell of the hollow particles of the present disclosure is preferably free of heteroatoms. To the extent that does not impair the effects of the present disclosure, the shell may contain a slight amount of component other than hydrocarbon. As the component other than hydrocarbon, examples include, but are not limited to, the above-described particle diameter control agent. In the total solid content (100% by mass) of the shell, the content of the component other than hydrocarbon in the shell is preferably 1% by mass or less, more preferably 0.5% by mass or less, and still more preferably 0.1% by mass or less. By controlling the content of the component other than hydrocarbon to the upper limit value or less, the electrical insulation and solvent resistance of the hollow particles can be increased.

In the present disclosure, the lower limit of the volume average particle diameter of the hollow particles is preferably 1 um or more, more preferably 1.5 um or more, and still more preferably 2 um or more. On the other hand, the upper limit of the volume average particle diameter of the hollow particles is preferably 10 $\mu$m or less, more preferably 8 $\mu$m or less, and still more preferably 6 um or less. When the volume average particle diameter of the hollow particles is equal to or more than the lower limit value, the aggregability of the hollow particles decreases, and the hollow particles exert excellent dispersibility, accordingly. When the volume average particle diameter of the hollow particles is equal to or less than the upper limit value, shell thickness non-uniformity is suppressed, and a uniform shell is easily formed. In addition, the hollow particles are less likely to collapse, and they obtain high mechanical strength. When the volume average particle diameter is within the above range, the hollow particles do not cause a wiring failure even if they are incorporated in the insulation resin layer of an electronic circuit board. Accordingly, the hollow particles are preferably used as an electronic circuit board material.

To control the volume average particle diameter of the hollow particles within the above-mentioned preferred range, for example, it is preferable to use the combination of the above-mentioned preferred dispersion stabilizer and particle diameter control agent in the mixture liquid preparation step, and it is also preferable to use the above-mentioned preferred hydrophobic solvent.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production.

The hollow particles of the present disclosure may have one or two or more hollow portions. From the viewpoint of maintaining good balance between high void ratio and mechanical strength and from the viewpoint of increasing the electrical insulation, the hollow particles preferably have only one hollow portion. The shell of the hollow particles of the present disclosure and, when the hollow particles have two or more hollow portions, a partition separating the adjacent hollow portions from each other may be porous. From the viewpoint of increasing the electrical insulation and increasing the solvent resistance, the shell and the partition are preferably solid.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 100 shown in the diagram (5) of FIG. 1. In this example, one thin film is provided on the outside, and the interior is filled with gas.

The shape of the particles can be determined by SEM or TEM, for example. Further, the shape of the interior of the particles and the presence of the fine resin particles in the interior of the particles can be determined by SEM or TEM after cutting the particles into round slices by a known method.

The particle size distribution (volume average particle diameter (Dv)/number average particle diameter (Dn) of the hollow particles may be 1.1 or more and 2.5 or less, for example. When the particle size distribution is 2.5 or less, hollow particles such that compressive strength and heat resistance slightly vary between the hollow particles, can be obtained. When the particle size distribution is 2.5 or less, a product having uniform thickness can be produced in the case of producing a molded body in a sheet form, for example.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The void ratio of the hollow particles of the present disclosure is 50% or more, preferably 60% or more, more preferably 70% or more, and still more preferably 75% or more. When the void ratio is equal to or more than the lower limit value, the hollow particles obtain excellent lightness in weight, excellent heat resistance and excellent heat insulation properties, and they obtain excellent electrical insulation. The upper limit of the void ratio of the hollow particles of the present disclosure is not particularly limited. From the viewpoint of suppressing a decrease in the strength of the hollow particles and making the hollow particles less likely to collapse, the upper limit is preferably 90% or less, more preferably 85% or less, and still more preferably 80% or less.

The void ratio of the hollow particles of the present disclosure is calculated from the addition amount and specific gravity of the material for forming the shell used in the production of the hollow particles, and the addition amount and specific gravity of the hydrophobic solvent. The material for forming the shell is the solid component (solid material) obtained by excluding the hydrophobic solvent from the materials for the oil phase in the mixture liquid prepared in the mixture liquid preparation step. The hydrophobic solvent is the hydrophobic solvent of the mixture liquid.

When the content of the polymerizable monomer is 99% by mass or more with respect to 100% by mass of the material for forming the shell, the shell can be considered to be composed of the polymer of the polymerizable monomer. Accordingly, the void ratio of the hollow particles can be calculated by the following formula (A):

$$
\text{Void ratio (\%) = 100-[(Addition amount of the}
$$
$$
\text{polymerizable monomer/Specific gravity of the polymerizable}
$$
$$
\text{monomer)/\{(Addition amount of the polymerizable monomer/Specific}
$$
$$
\text{gravity of the polymerizable monomer)+(Addition amount of the}
$$
$$
\text{hydrophobic solvent/Specific gravity of the hydrophobic}
$$
$$
\text{solvent)\}] Formula (A).}
$$

When the mixture liquid contains several kinds of polymerizable monomers, the "Addition amount of the polymerizable monomer/Specific gravity of the polymerizable monomer" in the formula (A) is the sum of the results of calculating the "Addition amount of the polymerizable monomer/Specific gravity of the polymerizable monomer" for the polymerizable monomers. When the mixture liquid contains several kinds of hydrophobic solvents, "Addition amount of the hydrophobic solvent/Specific gravity of the hydrophobic solvent" in the formula (A) is the sum of the results of calculating the "Addition amount of the hydrophobic solvent/Specific gravity of the hydrophobic solvent" for the hydrophobic solvents.

Also, the void ratio of the hollow particles of the present disclosure can be calculated from the apparent density $D_1$ and true density $D_0$ of the hollow particles.

A method for measuring the apparent density $D_1$ of the hollow particles is as follows. First, approximately 30 $cm^3$ of the hollow particles are introduced into a measuring flask with a volume of 100 $cm^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ ($g/cm^3$) of the hollow particles is calculated by the following formula (I).

$$\text{Apparent density } D_1 = [\text{Mass of the hollow particles}]/(100-[\text{Mass of the isopropanol}]/[\text{Specific gravity of the isopropanol at the measuring temperature}]) \quad \text{Formula (I)}$$

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ ($g/cm^3$) of the hollow particles is calculated by the following formula (II).

$$\text{True density } D_0 = [\text{Mass of the pulverized hollow particles}]/(100-[\text{Mass of the isopropanol}]/[\text{Specific gravity of the isopropanol at the measuring temperature}]) \quad \text{Formula (II)}$$

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) where $D_1$ is the apparent density of the hollow particles and $D_0$ is the true density thereof.

$$\text{Void ratio (\%) } = 100-(\text{Apparent density } D_1/\text{True density } D_0) \times 100 \quad \text{Formula (III)}$$

The void ratio of the hollow particle can be reworded as the ratio occupied by the hollow portion in the specific gravity of the hollow particle.

In some cases, as with the hollow particles obtained in Comparative Example 1 described below, conventional hollow particles contain, in the hollow portion, fine resin particles having a very small particle diameter compared to the hollow particles. In the present disclosure, from the viewpoint of excellent electrical insulation, the number of the fine resin particles present in the hollow portion of the hollow particles is preferably 3/hollow particle or less, more preferably 1/hollow particle or less, and still more preferably 0/hollow particle. When the number of the fine resin particles present in the hollow portion is equal to or less than the upper limit value, the ratio of the gas occupying the hollow portion can be increased. Accordingly, the relative permittivity and the dielectric dissipation factor can be decreased.

The particle diameter of the fine resin particles is generally from about 0.01 um to 0.5 um, which is equal to or less than one-tenth of the particle diameter of the hollow particles.

By the above-described production method of the present disclosure, the number of the fine resin particles present in the hollow portion can be controlled to the upper limit value or less.

The hollow particles of the present disclosure have excellent strength, since the shell contains a sufficient amount of the crosslinkable monomer unit. Due to the excellent strength, the hollow particles of the present disclosure are less likely to collapse when mixed and kneaded with other materials and even when molded after mixing and kneading with other materials. When they are added to a molded body, they exert excellent effects as a weight reducing material, a heat insulation material, an acoustic insulation material, a damping material and so on. In the hollow particles of the present disclosure, the amount of the residual hydrophobic solvent is reduced. Accordingly, ignition or smoke is not likely to occur when the hollow particles are mixed and kneaded with other materials such as resin. Accordingly, the hollow particles of the present disclosure are particularly suitable as an additive for molded body, and they are particularly suitable used as an additive for molded body made of a resin.

The molded body containing the hollow particles of the present disclosure may contain, as the resin, thermoplastic or thermosetting resin such as polyethylene, polypropylene, polyvinyl chloride, polystyrene, polyurethane, epoxy resin, acrylonitrile-butadiene-styrene (ABS) resin, acrylonitrile-styrene (AS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin and polyetherimide resin. When epoxy resin is used as the resin component, it is preferable to appropriately mix the resin with a catalyst or a curing agent such as an amine, an acid anhydride and an imidazole.

The molded body containing the hollow particles of the present disclosure may further contain organic or inorganic fibers such as carbon fibers, glass fibers, aramid fibers and polyethylene fibers. The hollow particles of the present disclosure can be contained as a filler in a molded body formed by use of a thermoplastic or thermosetting resin and in a molded body formed by use of a material containing fibers and a thermoplastic or thermosetting resin.

As the applications of the molded body made of a resin containing the hollow particles of the present disclosure, examples include, but are not limited to, members such as a light reflective material, a heat insulation material, a sound insulation material and a low dielectric material, which are used in various kinds of fields such as the automotive field, the electronic field, the electric field, the architecture field, the aviation field and the space field; food containers; footwears such as sports shoes and sandals; components of household appliances; components of bicycles; stationery supplies; and tools. Due to having excellent electrical insulation and excellent solvent resistance, the hollow particles of the present disclosure are particularly preferably used as a material for achieving low permittivity or low transmission loss, in the electronic or electrical field. For example, the hollow particles of the present disclosure are preferably used as an electronic circuit board material. More specifically, by incorporating the hollow particles of the present disclosure in the insulation resin layer of an electronic circuit board, the relative permittivity of the insulation resin layer and the transmission loss of the electronic circuit board can be decreased.

Also, the hollow particles of the present disclosure are preferably used as a material for semiconductor devices. The material is used, for example, for interlayer insulation materials, dry film resists, solder resists, bonding wires, magnet wires, semiconductor encapsulating materials, epoxy encapsulating materials, molded underfill materials, underfill materials, die bonding pastes, buffer coating materials, copper-clad laminates, flexible substrates, high frequency device modules, antenna modules or automotive radars. Of them, the hollow particles of the present disclosure are particularly preferably used as a material for semiconductor material devices, which is used for interlayer insulation materials, solder resists, magnet wires, epoxy encapsulating materials, underfill materials, buffer coating materials, copper-clad laminates, flexible substrates, high frequency device modules, antenna modules or automotive radars.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

(1) Mixture liquid preparation step

First, the following materials were mixed to produce an oil phase.

DVB960 (product name, manufactured by NIPPON STEEL Chemical & Material Co., Ltd., divinylbenzene purity 96%, ethylvinylbenzene content 4%): 26.2 parts

2,2'-azobis(4-methoxy-2,4-dimethylvaleronitrile) (an oil-soluble polymerization initiator manufactured by: FUJIFILM Wako Pure Chemical Corporation, product name: V-70): 0.6 parts

Rosin acid (manufactured by: Arakawa Chemical Industries, Ltd., product name: disproportionated rosin RONDIS R-CH, softening point: 150°C or more, acid value: 150 mgKOH/g to 160 mgKOH/g): 0.002 parts

Hydrophobic solvent: Hexane (73.4 parts)

Next, in a stirring tank, under a temperature condition of 40°C, an aqueous solution in which 5.5 parts of sodium hydroxide (an alkali metal hydroxide) was dissolved in 55 parts of ion-exchanged water, was gradually added under stirring to an aqueous solution in which 7.8 parts of magnesium chloride (a water-soluble polyvalent metal salt) was dissolved in 225 parts of ion-exchanged water, thereby preparing a magnesium hydroxide colloidal dispersion (a sparingly water-soluble metal hydroxide colloidal dispersion) . The stirring was stopped 40 minutes after the addition, and the dispersion was used as an aqueous phase.

The obtained aqueous phase and oil phase were mixed, thereby preparing a mixture liquid.

(2) Suspension step

The mixture liquid obtained in the mixture liquid preparation step was stirred with a disperser (product name: HOMO MIXER, manufactured by: PRIMIX Corporation) for one minute at a rotational frequency of 4,000 rpm to be suspended, thereby preparing a suspension in which droplets of a monomer composition including the hydrophobic solvent, were dispersed in water.

(3) Polymerization step

In a nitrogen atmosphere, the temperature of the suspension obtained in the suspension step was increased from 40°C to 65°C for one and a half hours, and then the suspension was stirred for 4 hours under a temperature condition of 65°C, thereby performing a polymerization reaction. Accordingly, a precursor composition was obtained, which was a slurry solution in which precursor particles including the hydrophobic solvent were dispersed in water.

(4) Washing step and solid-liquid separation step

The precursor composition obtained in the polymerization step was washed with dilute sulfuric acid (25°C, 10 minutes) to bring the pH of the composition to 5.5 or less. Next, water was separated therefrom by filtration. Then, 200 parts of ion-exchanged water was added to the resultant to make a slurry again, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

(5) Solvent removal step

The precursor particles obtained in the solid-liquid separation step were subjected to heating treatment for 6 hours with a vacuum dryer in a vacuum condition at 200°C, thereby removing the hydrophobic solvent from the particles. Accordingly, the hollow particles of Example 1 were obtained. From the scanning electron microscopy observation result and void ratio value of the obtained hollow particles, the particles were confirmed to be spherical and to have a hollow portion.

[Examples 2 to 5 and Comparative Examples 1 to 3]

The hollow particles of Examples 2 to 5 and Comparative Examples 1 to 3 were produced in the same manner as Example 1, except that in the above-mentioned "(1) Mixture liquid preparation step", the materials of the oil phase were changed as shown in Table 1.

[Evaluation]

The hollow particles obtained in Examples 1 to 5 and Comparative Examples 1 to 3 were measured and evaluated as follows. The results are shown in Table 1.

1. Volume average particle diameter

The volume average particle diameter of the hollow particles was measured with a particle size distribution measuring device (product name: MULTISIZER 4e, manufactured by: Beckman Coulter, Inc.) The measurement condition is as follows.

Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Void ratio

From the addition amount and specific gravity of the polymerizable monomer and hydrophobic solvent added to the oil phase in the mixture liquid preparation step, the void ratio of the hollow particles was calculated by the following formula (A) :

$$
\begin{aligned}
\text{Void ratio (\%)} = 100 - [&(\text{Addition amount of the polymerizable monomer/Specific gravity of the polymerizable monomer})/\{(\text{Addition amount of the polymerizable monomer/Specific gravity of the polymerizable monomer}) + (\text{Addition amount of the hydrophobic solvent/Specific gravity of the hydrophobic solvent})\}] \quad \text{Formula (A)}.
\end{aligned}
$$

3. Internal state of hollow particles

The hollow particles were broken by use of a spatula, and the internal state of the hollow particles was observed with the scanning electron microscope (manufactured by: JEOL Ltd., product name: JSM7610F). When the number of the fine resin particles present in the hollow portion was 0/hollow particle and the fine resin particles were not found in the interior of the hollow particles, the internal state of the hollow particles was evaluated as "Fine resin particles not present". When the internal state was evaluated as "Fine resin particles not present", the hollow particles had a shell that was uniform in thickness and had a hollow portion that was clearly distinguished from the shell. When the number of the fine resin particles present in the hollow portion was 1/hollow particle or more and the fine resin particle or particles were found in the interior of the hollow particles, the internal state of the hollow particles was evaluated as "Fine resin particles present". When the hollow portion was not formed in the interior of the hollow particles and the whole interior of the hollow particles was porous, the internal state of the hollow particles was evaluated as "Porous".

4. Solvent removal property

First, approximately 100 mg of the hollow particles were put into a 30 mL screw cap glass bottle and precisely weighed. Subsequently, approximately 10 g of tetrahydrofuran (THF) was put into the glass bottle and precisely weighed. The mixture in the glass bottle was stirred for 1 hour with a stirrer, and the hydrophobic solvent contained in the hollow particles was extracted. The stirring was stopped; the resin component of the hollow particles insoluble in THF was precipitated; then, a filter (product name: MEMBRANE FILTER 25JP020AN, manufactured by: Advantec Co., Ltd.) was installed at a syringe barrel; and the precipitate was filtered out to obtain a sample liquid. The sample liquid was injected into and analyzed by gas chromatography (GC). The amount (% by mass) of the hydrophobic solvent per unit mass contained in the hollow particles, was found from a peak area of GC and a calibration curve created in advance. Detailed analysis conditions are as follows.

(Analysis conditions)

> Apparatus: GC-2010 (manufactured by Shimadzu Corporation)
> Column: DB-5 (manufactured by Agilent Technologies Japan, Ltd.)
> Membrane thickness 0.25 um, Inner diameter 0.25 mm, Length 30 m
> Detector: FID
> Carrier gas: Nitrogen (linear velocity: 28.8 cm/sec)
> Temperature of the injection port: 200°C
> Temperature of the detector: 250°C
> Temperature of the oven: Raised from 40°C to 230°C at a rate of 10°C/minute, and held at 230°C for 2 minutes
> Amount of sampling: 2 $\mu$L

Using the above-obtained amount of the hydrophobic solvent contained in the hollow particles, the solvent removal property of the hollow particles was evaluated according to the following evaluation criteria.

(Evaluation criteria for solvent removal property)

◎ : The amount of the hydrophobic solvent per unit mass was less than 0.1% by mass.

> ○: The amount of the hydrophobic solvent per unit mass was 0.1% by mass or more and 1% by mass or less.
> ✕: The amount of the hydrophobic solvent per unit mass was more than 1% by mass.

5. Solvent resistance

In an environment at 25°C, 200 mg of the hollow particles were put in a 5 mL glass bottle; 4 mL of methyl ethyl ketone (MEK) was added thereto; and then the glass bottle was capped. The capped bottle was shaken 10 times by hand and then left to stand for 24 hours at 25°C. The ratio of the hollow particles thus submerged was obtained and evaluated according to the following evaluation criteria. The hollow particles submerged in the MEK were separated by a centrifuge and dried. Then, the mass of the hollow particles submerged in the MEK was measured. With respect to the total mass of the hollow particles, the ratio of the mass of the hollow particles submerged in the MEK was calculated, thereby obtaining the ratio of the submerged hollow particles.

(Evaluation criteria for solvent resistance)

> ○: The submerged hollow particles were less than 5% by mass.

> ✕: The submerged hollow particles were 5% by mass or more.

6. Measurement of relative permittivity and dielectric dissipation factor

Using a perturbation-type measuring device (manufactured by: AET Inc., model: ADMS01Nc), the relative permittivity and dielectric dissipation factor of the hollow particles were measured at a frequency of 1 MHz or 1 GHz and at room temperature (25°C).

[Table 1]

Table 1

|  |  | Example 1 | Example 2 | Example 3 | Example 4 | Example 5 |
|---|---|---|---|---|---|---|
| Polymerizable monomer | Type | DVB960 | DVB960 | DVB960 | DVB960 | DVB960 |
|  | Addition amount (Parts) | 26.2 | 26.2 | 26.2 | 26.2 | 26.2 |
|  | Purity (Content) | 96% | 96% | 96% | 96% | 96% |
| Hydrophobic solvent | Type | Hexane | Heptane | Octane | Pentane | Cyclohexane |
|  | Addition amount (Parts) | 73.4 | 73.4 | 73.4 | 73.4 | 73.4 |
| Polymerization initiator | Type | V70 | V70 | V70 | V70 | V70 |
|  | Addition amount (Parts) | 0.6 | 0.6 | 0.6 | 0.6 | 0.6 |
| Additive | Type | Rosin acid | Rosin acid | Rosin acid | Rosin acid | Rosin acid |
|  | Addition amount (Parts) | 0.002 | 0.002 | 0.002 | 0.002 | 0.002 |
| Volume average particle diameter (μm) |  | 3.2 | 2.6 | 4.1 | 3.0 | 3.3 |
| Void ratio (%) |  | 80 | 80 | 80 | 80 | 80 |
| Internal state of hollow particles |  | Fine resin particles not present | Fine resin particles not present | Fine resin particles not present | Fine resin particles not present | Fine resin particles not present |
| Solvent removal property |  | ◎ | ◎ | ○ | ◎ | ◎ |
| Solvent resistance (MEK) |  | ○ | ○ | ○ | ○ | ○ |
| Permittivity (@ 1 MHz) |  | 1.3 | 1.4 | 1.4 | 1.3 | 1.3 |
| Dielectric dissipation factor (@ 1 MHz) |  | 0.0003 | 0.0004 | 0.0004 | 0.0005 | 0.0009 |
| Permittivity (@ 1 GHz) |  | 1.3 | 1.3 | 1.3 | 1.3 | 1.3 |
| Dielectric dissipation factor (@ 1 GHz) |  | 0.002 | 0.003 | 0.002 | 0.004 | 0.008 |

Table 1-continued

|  |  | Comparative Example 1 | Comparative Example 2 | Comparative Example 3 |
|---|---|---|---|---|
| Polymerizable monomer | Type | EGDMA | EGDMA | DVB630 |
|  | Addition amount (Parts) | 26.2 | 26.2 | 26.2 |
|  | Purity (Content) | 100% | 100% | 63% |
| Hydrophobic solvent | Type | Hexane | Cyclohexane | Cyclohexane |
|  | Addition amount (Parts) | 73.4 | 73.4 | 73.4 |
| Polymerization initiator | Type | V70 | V70 | V70 |
|  | Addition amount (Parts) | 0.6 | 0.6 | 0.6 |
| Additive | Type | Rosin acid | Rosin acid | Rosin acid |
|  | Addition amount (Parts) | 0.002 | 0.002 | 0.002 |
| Volume average particle diameter (μm) |  | 4.0 | 2.9 | 3.5 |
| Void ratio (%) |  | 80 | 80 | 80 |
| Internal state of hollow particles |  | Fine resin particles present | Fine resin particles not present | Porous |
| Solvent removal property |  | ◎ | ◎ | ◎ |
| Solvent resistance (MEK) |  | × | × | × |
| Permittivity (@ 1 MHz) |  | 1.7 | 1.6 | 1.5 |
| Dielectric dissipation factor (@ 1 MHz) |  | 0.021 | 0.017 | 0.017 |
| Permittivity (@ 1 GHz) |  | 1.7 | 1.6 | 1.5 |
| Dielectric dissipation factor (@ 1 GHz) |  | 0.029 | 0.030 | 0.027 |

The meanings of abbreviations shown in Table 1 are as follows.

DVB960: Manufactured by NIPPON STEEL Chemical & Material Co., Ltd., Divinylbenzene purity: 96%, Ethylvinylbenzene content: 4%

DVB630: Manufactured by NIPPON STEEL Chemical & Material Co., Ltd., Divinylbenzene purity: 63%, Ethylvinylbenzene content: 37%

EGDMA: Ethylene glycol dimethacrylate

V70: 2,2'-azobis(4-methoxy-2,4-dimethylvaleronitrile) (An oil-soluble polymerization initiator manufactured by FUJIFILM Wako Pure Chemical Corporation, product name: V-70)

[Consideration]

In Comparative Examples 1 and 2, ethylene glycol dimethacrylate containing oxygen atoms was used as the crosslinkable monomer. Accordingly, while the hollow portion was formed in the interior of the particles, the particles were poor in solvent resistance and high in relative permittivity and dielectric dissipation factor. It is thought that since the particles obtained in Comparative Examples 1 and 2 contained the oxygen atoms in the shell, the compatibility between the shell and the polar solvent was high, and the polar solvent easily permeated the shell, accordingly. It is also thought that the relative permittivity and the dielectric dissipation factor were increased by the presence of the oxygen atoms. Moreover, in Comparative Example 1, many fine resin particles were present in the hollow portion of the obtained particles. This is presumed to be because the compatibility between the crosslinkable monomer and hydrophobic solvent used in Comparative Example 1 was too low. It is thought that since many fine resin particles were present in the interior of the hollow portion of the particles obtained in Comparative Example 1, the relative permittivity and the dielectric dissipation factor were further increased compared to Comparative Example 2.

In Comparative Example 3, a commercially-available divinylbenzene was used. The commercially-available divinylbenzene contained divinylbenzene (63% by mass) and, as an impurity, ethylvinylbenzene (37% by mass). In 100% by mass of the polymerizable monomer used, the content of the crosslinkable monomer was less than 70% by mass. In Comparative Example 3, accordingly, the whole interior of the obtained particles was porous, and a hollow portion that is clearly distinguished from the shell was not formed. Also in Comparative Example 3, the obtained particles were poor in solvent resistance and high in relative permittivity and dielectric dissipation factor. In Comparative Example 3, it is presumed that since sufficient phase separation did not occur between the shell-constituting component and the hydrophobic solvent in the droplets of the monomer composition, the porous particles were produced. It is also thought that from the structural point of view, the solvent easily permeates the hollow particles, and the relative permittivity and the dielectric dissipation factor are easily increased; therefore, the particles obtained in Comparative Example 3 were poor in solvent resistance and electrical insulation.

In Examples 1 to 5, the hydrocarbon monomer was used as the polymerizable monomer; in 100% by mass of the polymerizable monomer, the content of the crosslinkable monomer was 70% by mass or more; and the hydrocarbon solvent containing 5 to 8 carbon atoms was used as the hydrophobic solvent. Accordingly, the obtained particles were hollow particles which had a hollow portion that is clearly distinguished from the shell, which were excellent in solvent removal property and solvent resistance, and which were excellent in electrical insulation such as being low in relative permittivity and dielectric dissipation factor.

Reference Signs List

1. Aqueous medium
2. Low polarity material
3. Dispersion stabilizer
4. Monomer composition
4a. Hydrophobic solvent
4b. Material not containing hydrophobic solvent
4c. Polymerizable monomer dispersed in aqueous medium
5. Oil-soluble polymerization initiator
6. Shell
8. Hollow portion
10. Droplet
20. Precursor particle
100. Hollow particle having a hollow portion filled with gas

**Claims**

1. A method for producing hollow particles which comprise a shell containing a resin and a hollow portion surrounded by the shell and which have a void ratio of 50% or more,
   the method comprising:

   preparing a mixture liquid containing a polymerizable monomer, a hydrophobic solvent, a polymerization initiator, a dispersion stabilizer and an aqueous medium,
   suspending the mixture liquid to prepare a suspension in which droplets of a monomer composition containing the polymerizable monomer, the hydrophobic solvent and the polymerization initiator are dispersed in the aqueous medium, and
   subjecting the suspension to a polymerization reaction to prepare a precursor composition containing precursor particles which have a hollow portion surrounded by a shell containing a resin and which include the hydrophobic solvent in the hollow portion,
   wherein the polymerizable monomer is a hydrocarbon monomer, and in 100% by mass of the polymerizable monomer, a content of a crosslinkable monomer containing two or more ethylenically unsaturated double bonds is 70% by mass or more, and
   wherein the hydrophobic solvent is a hydrocarbon solvent containing 5 to 8 carbon atoms.

2. The method for producing the hollow particles according to Claim 1, wherein the mixture liquid contains at least one selected from the group consisting of rosin acids, higher fatty acids and metal salts thereof.

3. The method for producing the hollow particles according to Claim 1 or 2, wherein the dispersion stabilizer is an inorganic dispersion stabilizer.

4. The method for producing the hollow particles according to Claim 3, wherein the inorganic dispersion stabilizer is a sparingly water-soluble metal salt.

5. The method for producing the hollow particles according to any one of Claims 1 to 4, wherein a volume average particle diameter of the hollow particles is 1 um or more and 10 um or less.

6. Hollow particles which comprise a shell containing a resin and a hollow portion surrounded by the shell and which have a void ratio of 50% or more,

   wherein the shell contains a hydrocarbon polymer as the resin, and
   wherein a relative permittivity at a frequency of 1 MHz is 1.5 or less.

7. The hollow particles according to Claim 6, wherein a dielectric dissipation factor at a frequency of 1 MHz is 0.010 or less.

8. The hollow particles according to Claim 6 or 7, wherein a relative permittivity at a frequency of 1 GHz is 1.5 or less.

9. The hollow particles according to any one of Claims 6 to 8, wherein a dielectric dissipation factor at a frequency of 1 GHz is 0.010 or less.

10. The hollow particles according to any one of Claims 6 to 9, wherein the void ratio is 60% or more.

11. The hollow particles according to any one of Claims 6 to 10, wherein a volume average particle diameter is 1 um or more and 10 um or less.

FIG. 1

FIG. 2

## INTERNATIONAL SEARCH REPORT

| | International application No. |
|---|---|
| | **PCT/JP2021/039457** |

**A. CLASSIFICATION OF SUBJECT MATTER**

*C08F 12/36*(2006.01)i; *C08F 2/18*(2006.01)i
FI: C08F2/18; C08F12/36

According to International Patent Classification (IPC) or to both national classification and IPC

**B. FIELDS SEARCHED**

Minimum documentation searched (classification system followed by classification symbols)

C08F,C08J9

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2004/067638 A1 (MATSUSHITA ELECTRIC WORKS, LTD.) 12 August 2004 (2004-08-12) claims, p. 3, lines 40-48, p. 5, lines 46-50, p. 9, lines 6-12, examples | 6-11 |
| X | JP 2017-119843 A (NIPPON SYNTHETIC CHEMICAL INDUSTRY CO., LTD.) 06 July 2017 (2017-07-06) example 2, fig. 2 | 6-11 |
| X | JP 2000-315845 A (JSR CORP.) 14 November 2000 (2000-11-14) claims, paragraphs [0010], [0013], [0014], production example 2 | 6-11 |
| X | JP 2006-8750 A (MATSUSHITA ELECTRIC WORKS, LTD.) 12 January 2006 (2006-01-12) claims, paragraph [0016], examples 1, 2, 3, comparative examples 2, 3 | 6-11 |
| X | JP 2016-210902 A (KONICA MINOLTA INC.) 15 December 2016 (2016-12-15) claims, example 2 | 6-11 |
| X | KR 2015-0137783 A (UNIPLATEK CO., LTD.) 09 December 2015 (2015-12-09) claims, example 6 | 6-11 |

☑ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2021/039457**

**C.    DOCUMENTS CONSIDERED TO BE RELEVANT**

| Category* | Citation of document, with indication, where appropriate, of the relevant passages | Relevant to claim No. |
|---|---|---|
| X | JP 2008-231241 A (SANYO CHEMICAL INDUSTRIES, LTD.) 02 October 2008 (2008-10-02) claims, paragraphs [0007], [0023], [0027], [0029], [0030], [0037], [0041], example 2 | 1, 2, 5–11 |
| Y | | 3, 4 |
| Y | JP 2003-181274 A (SEKISUI CHEMICAL CO., LTD.) 02 July 2003 (2003-07-02) claims, paragraph [0012] | 3, 4 |
| A | JP 2008-115280 A (HITACHI, LTD.) 22 May 2008 (2008-05-22) claims, paragraph [0079] | 1-11 |
| A | JP 2013-221070 A (SANKO CO., INC.) 28 October 2013 (2013-10-28) entire text | 1-11 |
| A | JP 2007-270096 A (KOBE UNIVERSITY) 18 October 2007 (2007-10-18) entire text | 1-11 |

Form PCT/ISA/210 (second sheet) (January 2015)

INTERNATIONAL SEARCH REPORT
Information on patent family members

International application No.

**PCT/JP2021/039457**

| Patent document cited in search report | | | Publication date (day/month/year) | Patent family member(s) | | | Publication date (day/month/year) |
|---|---|---|---|---|---|---|---|
| WO | 2004/067638 | A1 | 12 August 2004 | (Family: none) | | | |
| JP | 2017-119843 | A | 06 July 2017 | (Family: none) | | | |
| JP | 2000-315845 | A | 14 November 2000 | (Family: none) | | | |
| JP | 2006-8750 | A | 12 January 2006 | (Family: none) | | | |
| JP | 2016-210902 | A | 15 December 2016 | (Family: none) | | | |
| KR | 2015-0137783 | A | 09 December 2015 | (Family: none) | | | |
| JP | 2008-231241 | A | 02 October 2008 | (Family: none) | | | |
| JP | 2003-181274 | A | 02 July 2003 | (Family: none) | | | |
| JP | 2008-115280 | A | 22 May 2008 | (Family: none) | | | |
| JP | 2013-221070 | A | 28 October 2013 | CN | 103372409 | A | |
| | | | | KR | 10-2013-0116817 | A | |
| JP | 2007-270096 | A | 18 October 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000313818 A

- JP 2004190038 A

**Non-patent literature cited in the description**

- Kagaku Binran, Kiso Hen, Kaitei 4 Ban. Maruzen Publishing Co., Ltd, 30 September 1993, II-498-II-503